# EUROPÄISCHE PATENTSCHRIFT

(11) **EP 0 546 509 B1**
(45) Veröffentlichungstag und Bekanntmachung des Hinweises auf die Patenterteilung: **17.07.1996**
(21) Anmeldenummer: 92120931.8
(22) Anmeldetag: 09.12.1992
(51) Int. Cl.: G01V 3/08, A01D 75/18, A01D 75/00

(54) **Vorrichtung an einer Erntemaschine zum Erkennen von ferromagnetischen Fremdkörpern im Erntegut**
Apparatus on harvesting machines for the recognition of ferromagnetic foreign bodies in the crop
Dispositif auprès des machines de récolte pour reconnaître des corps étrangers dans la récolte

(30) Priorität: 11.12.1991 DE 4140812
(43) Veröffentlichungstag der Anmeldung: 16.06.1993
(73) Patentinhaber: CLAAS SAULGAU GmbH, D-88348 Saulgau (DE)
(72) Erfinder: Weiss, Burkhard, O-8701 Weigsdorf-Köblitz (DE)
(74) Vertreter: Patentanwälte Eisele, Otten & Roth

(56) Entgegenhaltungen:
- EP-A- 0 229 991
- DE-A- 2 430 147
- US-A- 3 653 351
- US-A- 3 889 249

## Beschreibung

Die Erfindung betrifft eine Vorrichtung an einer Erntemaschine zum Erkennen von ferromagnetischen Fremdkörpern im Erntegut, nach dem Oberbegriff des Patentanspruchs 1.

Es sind mehrere ähnliche elektrische Vorrichtungen für diesen Zweck bekannt, insbesondere aus DE 22 52 595 A1, DE 24 30 147 A1 sowie aus der Zeitschrift "Agrartechnik international", April 1983, Seite 17. Diese Vorrichtungen haben das gemeinsame Merkmal, daß sich die Feldlinien in Förderrichtung erstrecken. Es sitzen wenigstens zwei Magnetpole in dieser Richtung hintereinander. Dadurch ergibt sich eine breite Bauweise, die beim Einbau in eine Walze zu Schwierigkeiten führt und die Reichweite der Magnetfelder begrenzt.

Eine gattungsgleiche Vorrichtung ist aus der EP 02 29 991 B1 bekannt. Zur Erzeugung der Magnetfelder sind auf einer im Innenraum einer Förderwalze angeordneten flachen Schiene mit guter magnetischer Leitfähigkeit blockförmige Permanentmagnete aufgereiht, die senkrecht zu der Schiene und etwa radial bezüglich der Walzenachse magnetisiert sind. Die Magnete auf der halben Schienenlänge, d. h. der halben Förderwegbreite, bilden Nordpole und die Magnete auf der anderen Hälfte Südpole. Somit erstrecken sich die magnetischen Feldlinien quer zur Förderrrichtung. Die jeweils mittleren Magnete der beiden Magnetgruppen sind von je einer Aufnahmespule umgeben, die - bei gleichem Wicklungssinn - gegeneinander geschaltet sind.

Nachteilig wirkt sich hier aus, daß bei dicht über den Magneten bewegten elektrischen Leitern, z. B. bei dem metallischen Walzenmantel, die Empfindlichkeit der Vorrichtung erheblich eingeschränkt werden kann, weil dann die in den elektrischen Leitern entstehenden Wirbelströme Störspannungen in der Aufnahmespule induzieren. Die Empfindlichkeit der Vorrichtung wird auch negativ beeinflußt durch die entgegengesetzte magnetische Polung an den Förderwegseiten. Diese bewirkt einen Magnetfeldschluß über den magnetischen Rahmen der Erntemaschine, so daß bewegliche Teile des Rahmens bzw. deren Eigenschwingungen, Störspannungen hervorrufen. Schließlich entspricht auch die Größe des räumlichen Bereichs über der Vorrichtung, innerhalb dessen vagabundierende ferromagnetische Teile erkannt werden, noch nicht den Anforderungen bei großen Erntemaschinen. Insbesondere ist wegen des großen Magnetpolabstandes die Höhe dieses sogenannten Erkennungsbereichs begrenzt.

Mit der Erfindung sollen diese Nachteile beseitigt werden. Ihr liegt die Aufgabe zugrunde, eine Vorrichtung zum Erkennen von ferromagnetischen Fremdkörpern zu schaffen, die bei geringem Fertigungsaufwand die Induktion von Störspannungen in den Aufnahmespulen weitestgehend ausschließt und auch bei großen Förderwegbreiten eine große Erkennungshöhe gewährleistet.

Diese Aufgabe wird erfindungsgemäß gelöst wie in kennzeichnenden Teil des Anspruchs 1 angegeben ist.

Nähert sich ein ferromagnetischer Fremdkörper dem Magnetfeld, so werden dessen Feldlinien verschoben bzw. geschnitten, wodurch in den Aufnahmespulen Spannungen induziert werden, so daß ein Strom fließt. Durch die gleiche Polung der äußeren Magnetpole wird dabei verhindert, daß der umgebende magnetisierbare Rahmen der Erntemaschine in das Magnetfeld der Vorrichtung einbezogen wird. Damit werden die Störspannungen, die von beweglichen Bauteilen am Rahmen hervorgerufen werden, ausgeschlossen, so daß gegenüber den vorbekannten Vorrichtungen eine höhere Empfindlichkeit erreicht wird. Durch diese Magnetpolanordnung wird weiter eine Kompensationswirkung bezüglich des Wirbelstromeffektes in dicht über den Magneten bewegten elektrischen Leitern erreicht, was zu einer nochmaligen Senkung der Störsignale führt. Damit wird es möglich, ohne Empfindlichkeitseinschränkung die die Vorrichtung umschließende Walze aus nichtmagnetisierbarem Stahl herzustellen. Dies bringt gegenüber den nach dem Stand der Technik notwendige Kunststoffwalzen Vorteile bezüglich der Zuverlässigkeit und Funktion. Durch die Anordnung von Aufnahmespulen um jeden zweiten oder auch um jeden Magnetpol kann mittels Addierschaltung der Aufnahmespulen ein starkes gut auswertbares Erkennungssignal erzeugt werden.

Neben der bereits genannten Ausschließung von Störsignalen ist bei der erfindungsgemäßen Lösung von Vorteil, daß der Aufbau der Magnetfelderzeugungseinrichtung einfach ist und besonders bei großen Förderwegbreiten über die gesamte Breite ein fast gleichbleibendes Erkennungssignal erzeugt wird.

Voraussetzung für die einwandfreie Funktion der Vorrichtung ist aber, wie auch bei allen bisher bekannten Lösungen, daß alle sich im Erkennungsbereich befindlichen beweglichen Maschinenteile, wie insbesondere Förderwalzen, aus nichtmagnetischen Werkstoffen bestehen.

Um eine genügend große Erkennungswahrscheinlichkeit zu erreichen ist es zweckmäßig, daß die Magnetfelderzeugungseinrichtung aus drei Magnetpolen besteht, wobei die zwei Magnetpole gleicher Polung unmittelbar an den Außenseiten des Förderweges angeordnet sind und der dritte, entgegengesetzt gepolte Magnetpol genau mittig zum Erntegutförderweg angeordnet ist. Vorzugsweise sind zwischen den Magnetpolen Freiräume vorgesehen und alle Magnetpole sind von Aufnahmespulen umschlossen, welche in Reihenaddierschaltung verbunden sind.

Ferner ist es möglich, die einzelnen Magnetpole in mehrere Einzelstücke aufzulösen, welche spielgebend zueinander auf der Grundplatte angeordnet sind. Dabei ist mindestens eines der Einzelstücke jedes Magnetpoles von einer Aufnahmespule umschlossen.

Nachstehend soll die Erfindung an einem Ausführungsbeispiel näher erläutert werden. In den zugehörigen Zeichnungen zeigt:
- Fig. 1: einen Teilschnitt durch die untere Förderwalze eines Feldhäckslers mit eingebauter Vorrichtung zum Schutz vor metallischen Fremdkörpern,
- Fig. 2: eine schematische Draufsicht auf die Magnetfelderzeugungseinrichtung mit Lage und Schaltung der Aufnahmespulen,
- Fig. 3: einen Querschnitt III - III der Förderwalze nach Fig. 1 und
- Fig. 4: ein Diagramm der Verteilung und Reichweite der Erkennungsmöglichkeit M über die Breite B der Magnetfelderzeugungseinrichtung bzw. die Breite E des Erntegutförderweges.

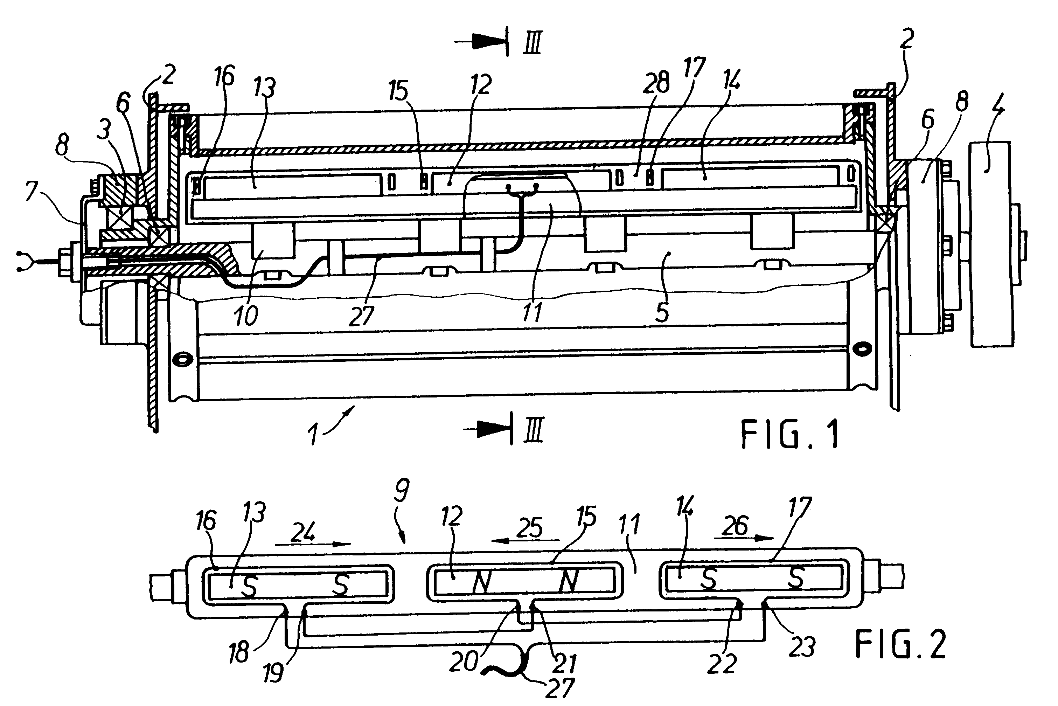

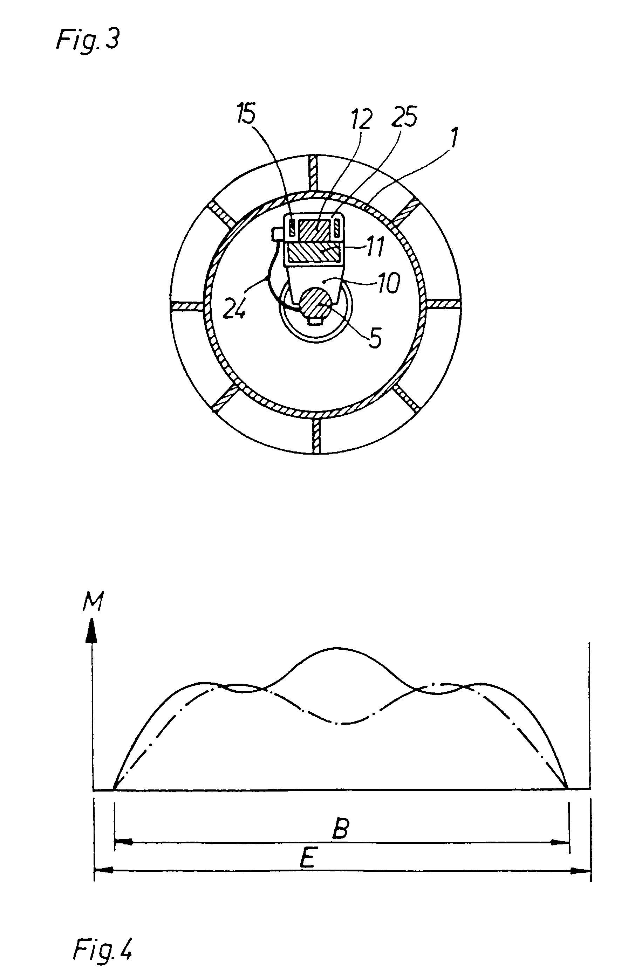

Nach den Figuren 1 und 3 ist eine Erkennungsvorrichtung in der vorderen unteren Walze 1 eines nicht dargestellten Zuführsystems eines Feldhäckslers eingebaut. Zwischen den Seitenwänden 2 des Zuführsystems ist die aus nichtmagnetisierbarem Stahl bestehende Walze 1 mittels Lagerungen 3 drehbeweglich aufgenommen. Auf einer Seite wird die Walze 1 über ein Getriebe 4 angetrieben. Koaxial in der Walze ist eine Achse 5 über Lagerungen 6 gelagert. Die Achse 5 reicht mit einem Ende aus der Lagerung 3 der Walze 1 heraus und ist mittels einer Halterung 7 mit dem Lagergehäuse 8 und der Seitenwand 2 starr verbunden.

Auf der Achse 5 ist diese in Fig. 2 gezeigte Magnetfelderzeugungseinrichtung 9 angeordnet. Hierzu ist mit der Achse 5 über Zwischenstücke 10 eine Grundplatte 11 lösbar befestigt, wobei die Grundplatte 11 aus einem Werkstoff mit guten magnetischen Leitfähgikeiten besteht. Auf der Grundplatte 11 sind Magnetpole 12; 13; 14 so befestigt, daß genau mittig zum Erntegutförderweg bzw. zur Walze 1 ein Pol 12, im Ausführungsbeispiel der Nordpol, und symmetrisch zum Pol 12, möglichst nahe an den Seitenwänden 2, zwei weitere Pole 13 und 14 mit entgegengesetzter Polung, also im Ausführungsbeispiel Südpole, angeordnet sind.

Um jeden Magnetpol 12; 13; 14 ist eine Aufnahmespule 15; 16; 17 in mehreren Windungen gelegt. Die Anschlußklemmen 19; 20; 21; 22 sind miteinander so verbunden, daß sich die induzierten Spannungen addieren. Die Stromrichtung ist durch Pfeile 24; 25; 26 angegeben. An den Anschlußklemmen 18; 23 ist ein Kabel 27 angeschlossen, welches durch die Achse 5 nach außen zu einer nicht dargestellten Signalverarbeitungseinrichtung führt. Letztlich sind alle Bauteile der Magnetfelderzeugungseinrichtung 9 und die Aufnahmespulen 15; 16; 17 zur Lagefixierung und zum Schutz von einem Kunststoffgehäuse 28 eingeschlossen.

Nähert sich der Erkennungsvorrichtung ein ferromagnetischer Fremdkörper, wird in den Aufnahmespulen 15; 16; 17 ein Strom induziert, dessen Größe von der Entfernung des metallischen Fremdkörpers von den Aufnahmespulen 15; 16; 17 abhängig ist. In der Signalverarbeitungseinrichtung wird das gewonnene Signal elektrisch zur automatischen Stillsetzung des Zuführsystems des Feldhäckslers in bekannter Weise umgesetzt.

In Fig. 4 ist das Erkennungsprofil, d. h. die Erkennungsmöglichkeit M über der Breite B der Magnetfelderzeugungseinrichtung 9 und der Breite E des Erntegutförderweges dargestellt. Die strichpunktierte Linie stellt dabei die Kennlinie der bekannten Lösung nach EP 02 29 991 B1 dar. Die ausgezogene Vollinie ist die Kennlinie nach diesem Ausführungsbeispiel der Erfindung.

Daraus ist ersichtlich, daß neben den anderen Vorteilen, eine Verbesserung der Erkennungsmöglichkeiten in den Randbereichen und im Mittelbereich erreicht wurde.

Zur weiteren Vergleichmäßigung des Kennlinienverlaufes ist es möglich, die Anzahl der Magnetpole auf fünf oder weiter zu erhöhen.
- 1: Walze
- 2: Seitenwand
- 3: Lagerung
- 4: Getriebe
- 5: Achse
- 6: Lagerung
- 7: Halterung
- 8: Lagergehäuse
- 9: Magnetfelderzeugungseinrichtung
- 10: Zwischenstück
- 11: Grundplatte
- 12: Magnetpol
- 13: Magnetpol
- 14: Magnetpol
- 15: Aufnahmespule
- 16: Aufnahmespule
- 17: Aufnahmespule
- 18: Anschlußklemme
- 19: Anschlußklemme
- 20: Anschlußklemme
- 21: Anschlußklemme
- 22: Anschlußklemme
- 23: Anschlußklemme
- 24: Stromrichtung
- 25: Stromrichtung
- 26: Stromrichtung
- 27: Kabel
- 28: Kunststoffgehäuse

## Patentansprüche

1. Vorrichtung an einer Erntemaschine zum Erkennen von ferromagnetischen Fremdkörpern im Erntegut, mit einer Magnetfelderzeugungseinrichtung, deren Magnetpole in einer einzigen, sich quer zur Förderrichtung des Erntegutes erstreckenden Reihe angeordnet sind und deren Feldlinien über die gesamte Breite des Förderweges verlaufen, und mit Aufnahmespulen, die so in Reihe geschaltet sind, daß sich die in ihnen induzierten Spannungen addieren, wobei den Aufnahmespulen eine Signalauswerteeinrichtung nachgeschaltet ist, dadurch gekennzeichnet, daß eine ungerade Anzahl von Magnetpolen (12; 13; 14) mit abwechselnder Polarität vorhanden ist und daß mindestens jeden zweiten Magnetpol (12) eine Aufnahmespule (15) umschließt.

2. Vorrichtung nach Anspruch 1, dadurch gekennzeichnet, daß die Magnetfelderzeugungseinrichtung (9) aus drei Magnetpolen (12; 13; 14) besteht, wobei die Magnetpole (13; 14) gleicher Polung an den Außenseiten des Förderweges angeordnet sind und der dritte, entgegengesetzt gepolte Magnetpol (12) mittig zum Förderweg angeordnet ist und daß alle Magnetpole (12; 13; 14) von je einer Aufnahmespule (15; 16; 17) umschlossen sind.

## Claims

1. Apparatus on a harvesting machine for the recognition of ferromagnetic foreign bodies in the crop, with a magnetic field generating device the magnetic poles of which are arranged in a single row at right angles to the direction of conveyance of the crop and the field lines of which extend over the entire width of the conveyor path, and with mounting coils which are connected in series so that the voltages induced therein add up, whereby a signal interpreting device is connected after the mounting coils, characterised in that there is an uneven number of magnetic poles (12; 13; 14) with alternating polarity and a mounting coil (15) encompasses at least every second magnetic pole (12).

2. Apparatus according to claim 1, characterised in that the magnetic field generating device (9) comprises three magnetic poles (12; 13; 14), whereby the magnetic poles (13; 14) with the same polarity are arranged on the outer edges of the conveyor path and the third magnetic pole (12) of opposite polarity is arranged centrally in relation to the conveyor path, and each of the magnetic poles (12; 13;14) is surrounded by a mounting coil (15; 16; 17).

## Revendications

1. Dispositif, sur une moissonneuse, pour reconnaître des corps étrangers ferromagnétiques dans la récolte, comportant un dispositif engendrant un champ magnétique dont les pôles magnétiques sont agencés en une rangée unique s'étendant transversalement à la direction de transport de la récolte et dont les lignes de champ s'étendent sur toute la largeur de la voie de transport, et comportant des bobines de réception qui sont montées en série de sorte que les tensions induites dans celles-ci s'additionnent, un dispositif d'exploitation de signaux étant disposé en aval des bobines de réception,
caractérisé en ce qu'un nombre impair de pôles magnétiques (12;13;14) de polarité alternative est présent et en ce qu'une bobine de réception (15) entoure au moins chaque second pôle magnétique (12).

2. Dispositif selon la revendication 1,
caractérisé en ce que le dispositif engendrant un champ magnétique (9) est constitué de trois pôles magnétiques (12;13;14), les pôles magnétiques (13;14) de même polarité étant agencés sur les faces externes de la voie de transport et le troisième pôle magnétique (12), de polarité opposée, étant agencé de façon centrale par rapport à la voie de transport, et en ce que tous les pôles magnétiques (12;13;14) sont entourés par à chaque fois une bobine de réception (15;16;17).
